(19) Europäisches Patentamt
European Patent Office
Office européen des brevets

(11) Veröffentlichungsnummer: **0 027 611**
**B1**

(12) # EUROPÄISCHE PATENTSCHRIFT

(45) Veröffentlichungstag der Patentschrift: **18.05.83**

(51) Int. Cl.³: **C 09 B 23/14,** D 21 H 3/80, C 09 D 11/00

(21) Anmeldenummer: **80106163.1**

(22) Anmeldetag: **10.10.80**

(54) **Kationische Bis-styrylfarbstoffe und ihre Verwendung zum Färben von Papier oder in Druckfarben.**

(30) Priorität: **18.10.79 DE 2942185**

(43) Veröffentlichungstag der Anmeldung: **29.04.81 Patentblatt 81/17**

(45) Bekanntmachung des Hinweises auf die Patenterteilung: **18.05.83 Patentblatt 83/20**

(84) Benannte Vertragsstaaten: **BE CH DE FR GB IT LI NL**

(73) Patentinhaber: **BASF Aktiengesellschaft, Carl-Bosch-Strasse 38, D-6700 Ludwigshafen (DE)**

(72) Erfinder: **Eisert, Manfred, Dr., Berner Weg 26, D-6700 Ludwigshafen (DE)**
Erfinder: **Grychtol, Klaus, Dr., Seebacher Strasse 96A, D-6702 Bad Duerkheim 1 (DE)**

(56) Entgegenhaltungen:

**DE-A-2 716 765**
**GB-A-2 011 457**
**GB-A-2 026 522**
**US-A-3 742 012**

**Die Akte enthält technische Angaben, die nach dem Eingang der Anmeldung eingereicht wurden und die nicht in dieser Patentschrift enthalten sind.**

**EP 0 027 611 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Kationische Bis-styrylfarbstoffe und ihre Verwendung zum Färben von Papier oder in Druckfarben

Die Erfindung betrifft Verbindungen der allgemeinen Formel I,

A - B - A (I)

in der A einen Rest der Formel

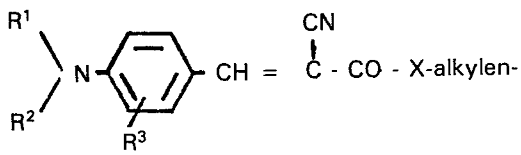

und B ein Brückenglied der Formel

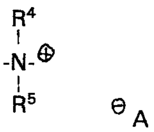

bedeuten, wobei $R^1$ und $R^2$ unabhängig voneinander gegebenenfalls durch Hydroxy, $C_1$- bis $C_4$-Alkoxy, Cyan, $C_1$- bis $C_4$-Alkoxycarbonyl, Di-$C_1$- bis $C_4$-Alkylamino, Chlor oder Brom substituiertes $C_1$- bis $C_4$-Alkyl, Cyclohexyl, Benzyl, Phenyläthyl oder Phenyl, $R^1$ und $R^2$ zusammen mit dem Stickstoff Morpholino, Pyrrolidino, Piperidino oder N-Methylpiperazino,

$R^3$ Wasserstoff, Chlor, Brom, Methyl, Äthyl, Methoxy, Äthoxy oder Nitro,

$R^4$ und $R^5$ unabhängig voneinander Wasserstoff, $C_1$- bis $C_4$-Alkyl oder Benzyl und

X Sauerstoff oder Imino sind und

Alkylen geradkettig oder verzweigt mit 2 bis 6 C-Atomen ist.

Reste $R^1$ und $R^2$ sind neben den bereits einzeln genannten z.B.: $CH_3$, $C_2H_5$, $C_3H_7$, $C_4H_9$, $C_2H_4OH$, $CH_2CHOHCH_3$, $C_2H_4OCH_3$, $C_2H_4OC_2H_5$, $C_2H_4OC_3H_7$, $C_2H_4CN$, $C_2H_4COOCH_3$, $C_2H_4COOC_2H_5$, $C_2H_4Cl$, $C_2H_4N(CH_3)_2$, $C_2H_4N(C_2H_5)_2$, $C_2H_4N(C_3H_7)_2$, $C_2H_4N(C_4H_9)_2$ oder $CH_2CN$,

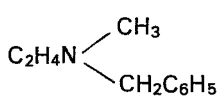

Alkylenreste sind z.B.: $-CH_2-CH_2-$, $-CH_2-CH-CH_3$, $-CH_2-CH_2-CH_2-$, $-CH_2-CH_2-CH_2-CH_2-$

$-CH_2-CH-CH_2-CH_3$ oder $CH_3-CH-CH-CH_3$

Als Brückenglieder B kommen z.B. in Betracht:

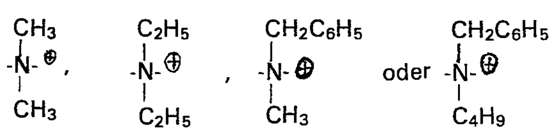

Anionen A⊖ sind beispielsweise:
Chlorid, Bromid, Sulfat, Nitrat, Dihydrogenphosphat, Methosulfat, Äthosulfat, Rhodanid, Formiat, Acetat, Propionat, Chloracetat, Zitronat oder Lactat.

Die Verbindungen der Formel I lassen sich herstellen durch Umsetzung von Aldehyden der Formel II

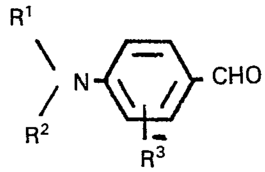

(II)

mit Verbindungen der Formel III

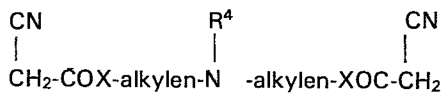

A (III).

Die Verbindungen der Formel I mit X = Sauerstoff sind auch zugänglich durch Umsetzung von Verbindungen der Formel IV

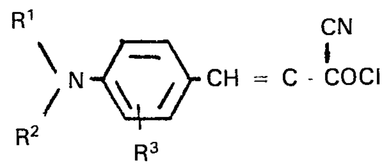

(IV)

mit Verbindungen der Formel V

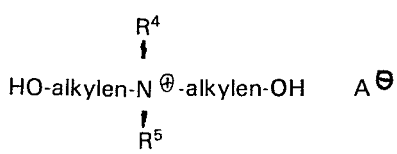

(V).

Einzelheiten der Synthesewege können den Beispielen entnommen werden.

Die Verbindungen der Formel I sind gelb. Sie eignen sich sehr gut zum Färben von Papier und zeichnen sich hier durch ein sehr gutes Ziehvermögen aus. Teilweise sind die Verbindungen der Formel I sehr gut in Alkohol löslich. Diese Farbstoffe eignen sich für die Herstellung von Druckfarben.

Vergleichbare Farbstoffe sind schon aus der DE-A-2 716 765 und insbesondere der US-A-3 742 012 bekannt, weisen jedoch weniger Farbstärke und Aufziehverhalten auf holzhaltigem Papier auf.

Die in den folgenden Beispielen genannten Teile beziehen sich auf das Gewicht.

*Beispiel 1*

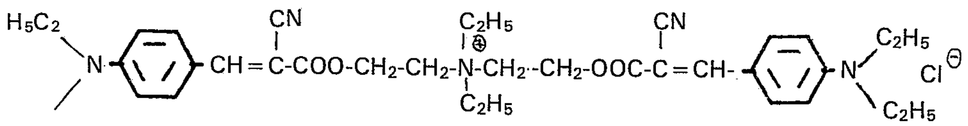

20,4 Teile Cyanessigsäure und 72 Teile Essigsäureanhydrid werden 30 Minuten bei 50 °C gerührt und dann mit 23,7 Teilen Diäthyl-bis-hydroxyäthyl-ammoniumchlorid (hergestellt durch Umsetzung stöchiometrischer Mengen Diäthyläthanolamin und Äthylenchlorhydrin in i-Butanol) und 42,4 Teilen p-Diäthylaminobenzaldehyd versetzt. Man erwärmt auf 90 °C und hält 3 Stunden bei dieser Temperatur. Anschliessend kühlt man ab auf Raumtemperatur. Nach Zugabe von 50Teilen Essigester wird noch eine Stunde nachgerührt, dann abgesaugt, mit Essigester gewaschen und getrocknet. Man erhält 65 Teile eines Farbstoffs, der Papier in reinen, grünstichig gelben Tönen färbt. Das Abwasser ist kaum angefärbt. max. 433 nm.

Ebenfalls gelbe Papierfarbstoffe werden erhalten, wenn man die folgenden Aldehyde oder Gemische dieser Aldehyde verwendet:

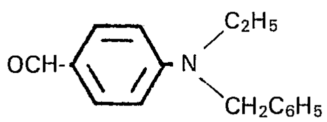

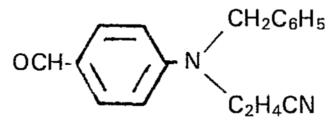

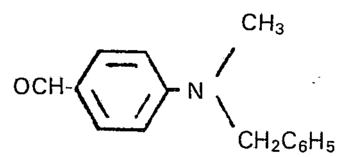

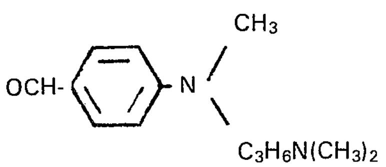

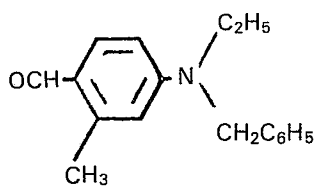

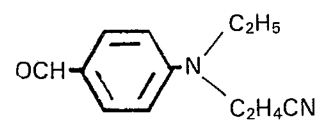

*Beispiel 2*

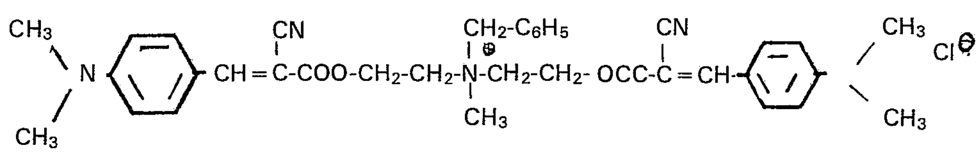

20,4 Teile Cyanessigsäure und 74 Teile Essigsäureanhydrid werden 30 Minuten bei 50 °C gerührt und dann mit 30 Teilen Bis-hydroxyäthyl-methylbenzylammoniumchlorid (hergestellt durch Umsetzung stöchiometrischer Mengen Methyldiäthanolamin und Benzylchlorid in Aceton) und 35,8 Teilen p-Dimethylaminobenzaldehyd versetzt. Man erwärmt auf 80 °C und rührt 10 Stunden bei dieser Temperatur. Anschliessend kühlt man ab auf Raumtemperatur. Man erhält einen Flüssigfarbstoff, der auf Papier reine, grünstichig gelbe Färbungen liefert. Das Abwasser ist nur sehr schwach gefärbt. max. 422 nm.

Mit den folgenden Aldehyden erhält man ebenfalls gelbe Flüssigfarbstoffe:

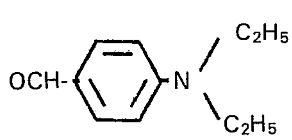

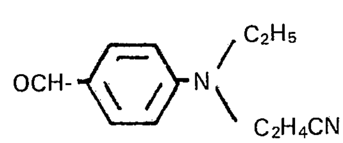

*Beispiel 3*

Man arbeitet wie in Beispiel 2 beschrieben und entfernt dann die flüchtigen Anteile aus dem Flüssigfarbstoff durch Destillation im Vakuum bei 80 °C. Das Farbharz, das man dabei erhält, wird mit Äthanol im Verhältnis 1:1 versetzt und in Lösung gebracht. Man erhält einen Flüssigfarbstoff, der sich sehr gut zur Herstellung von Druckfarben eignet.

*Beispiel 4*

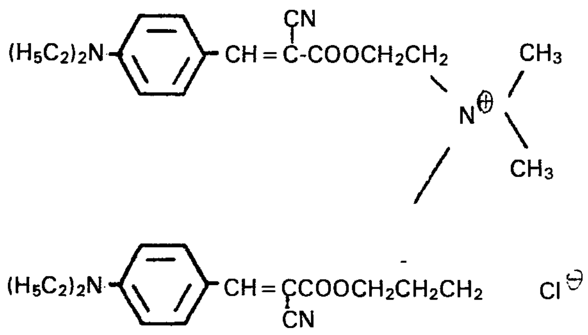

25,5 Teile Cyanessigsäure und 90 Teile Essigsäureanhydrid werden 30 Minuten bei 50°C gerührt. Dann setzt man 29 Teile Dimethyl-2-hydroxyäthyl-3'-hydroxypropyl-ammoniumchlorid (hergestellt durch Umsetzung stöchiometrischer Mengen 3-Dimethylaminopropanol-1 und Äthylenchlorhydrin) und 53 Teile p-Diäthylaminobenzaldehyd zu, erwärmt auf 80°C und rührt 10 Stunden bei dieser Temperatur. Anschliessend kühlt man ab auf Raumtemperatur. Man erhält einen Flüssigfarbstoff, der auf Papier reine, grünstichig gelbe Färbungen liefert. Das Abwasser ist nur sehr schwach gefärbt. max. 431 nm.

Auch mit den folgenden Aldehyden oder Gemischen dieser Aldehyde werden gelbe Papierfarbstoffe erhalten:

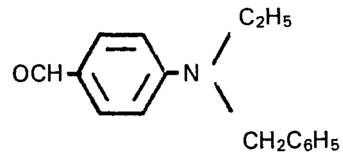

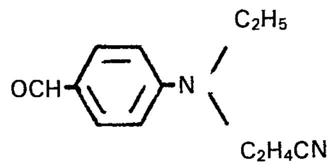

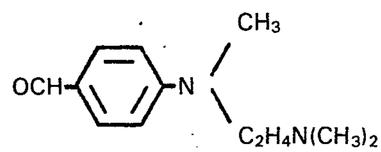

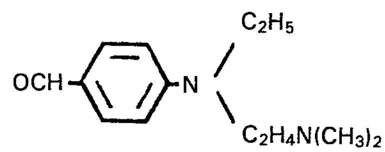

*Beispiel 5*

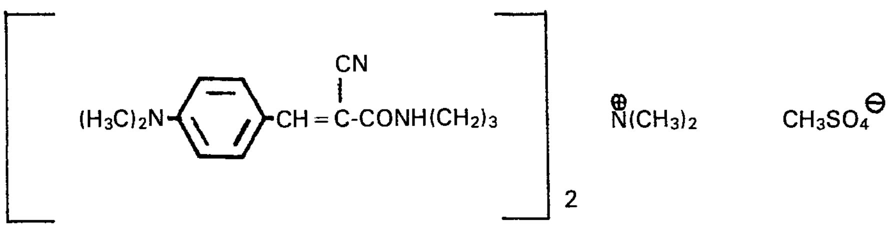

56,5 Teile Äthylcyanacetat, 36,3 Teile Bis-(3-aminopropyl)-methylamin und 250 Teile Perchloräthylen werden 2 Stunden unter Rückfluss gekocht. Dann kühlt man ab auf Raumtemperatur und tropft langsam 32 Teile Dimethylsulfat zu. Das Reaktionsgemisch wird 2 Stunden bei Rückflusstemperatur gerührt, dann mit 74,5 Teilen p-Dimethylaminobenzaldehyd versetzt und weitere 6 Stunden unter Rückfluss gekocht.

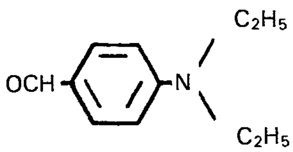

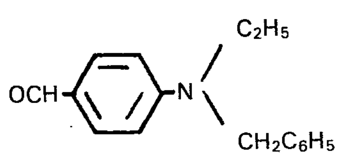

Destilliert man das Lösungsmittel ab, so erhält man ein zähes Öl, das bei Zugabe von Aceton kristallisiert. Der Niederschlag wird abgesaugt, mit Aceton gewaschen und getrocknet. Man erhält 94 teile eines Farbstoffs, der Papier in gelben Tönen färbt. max. 414 nm.

Gelbe Farbstoffe werden auch mit den folgenden Aldehyden oder Gemischen dieser Aldehyde erhalten.

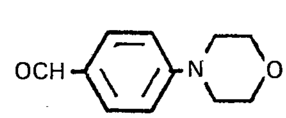

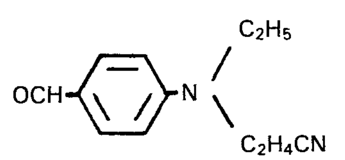

**Patentansprüche**

1. Verbindungen der allgemeinen Formel I

A - B - A (I)

in der A einen Rest der Formel

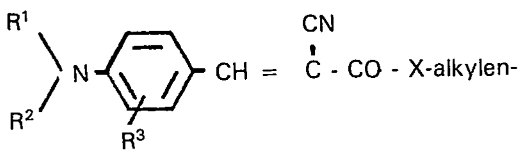

und B ein Brückenglied der Formel

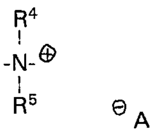

bedeuten, wobei

$R^1$ und $R^2$ unabhängig voneinander gegebenenfalls durch Hydroxy, $C_1$- bis $C_4$-Alkoxy, Cyan, $C_1$- bis $C_4$-Alkoxycarbonyl, Di-$C_1$- bis $C_4$-alkylamino, Chlor oder Brom substituiertes $C_1$- bis $C_4$-Alkyl, Cyclohexyl, Benzyl, Phenyläthyl oder Phenyl,

$R^1$ und $R^2$ zusammen mit dem Stickstoff Morpholino, Pyrrolidino, Piperidino oder N-Methylpiperazino,

$R^3$ Wasserstoff, Chlor, Brom, Methyl, Äthyl, Methoxy, Äthoxy oder Nitro,

$R^4$ und $R^5$ unabhängig voneinander Wasserstoff, $C_1$- bis $C_4$-Alkyl oder Benzyl und

X Sauerstoff oder Imino sind und

Alkylen gradkettig oder verzweigt mit 2 bis 6 C-Atomen ist.

2. Verbindungen gemäss Anspruch 1, in denen X Sauerstoff ist.

3. Verbindungen gemäss Anspruch 1, in denen $R^1$ und $R^2$ Methyl oder Äthyl und $R^3$ Wasserstoff ist.

4. Verwendung der Verbindungen gemäss Anspruch 1 zum Färben von Papier oder in Druckfarben.

**Claims**

1. A compound of the general formula I

A - B - A

where A is a radical of the formula

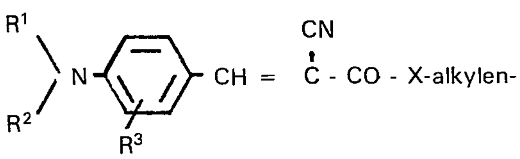

and B is a bridge member of the formula

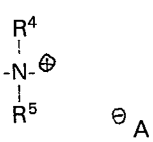

and where

$R^1$ and $R^2$ independently of one another are unsubstituted or hydroxy-, $C_1$-$C_4$-alkoxy-, cyano-, $C_1$-$C_4$-alkoxycarbonyl-, di-$C_1$-$C_4$-alkylamino-, chlorine- or bromine-substituted $C_1$-$C_4$-alkyl, cyclohexyl, benzyl, phenylethyl or phenyl, or

$R^1$ and $R^2$ together with the nitrogen are morpholino, pyrrolidino, piperidino or N-methylpiperazino,

$R^3$ is hydrogen, chlorine, bromine, methyl, ethyl, methoxy, ethoxy or nitro,

$R^4$ and $R^5$ independently of one another are hydrogen, $C_1$-$C_4$-alkyl or benzyl,

X is oxygen or imino, and

alkylene is of 2 to 6 carbon atoms and is linear or branched.

2. A compound as claimed in claim 1, where X is oxygen.

3. A compound as claimed in claim 1, where $R^1$ and $R^2$ are methyl or ethyl and $R^3$ is hydrogen.

4. The use of a compound as claimed in claim 1 for colouring paper and in printing inks.

**Revendications**

1. Composés de formule générale I

A - B - A (I)

dans laquelle A représente un reste de formule

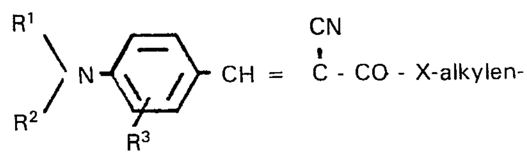

et B un pont de formule

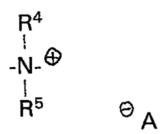

$R^1$ et $R^2$ représentent chacun, indépendamment l'un de l'autre, un groupe alkyle en C1-C4, cyclohexyle, benzyle, phényléthyle ou phényle éventuellement substitué par des groupes hydroxy, alcoxy en C1-C4, cyano, (alcoxy en C1-C4)-carbonyle, di-(alkyle en C1-C4)-amino, le chlore ou le brome, ou bien $R^1$ et $R^2$ forment ensemble et avec l'atome d'azote un groupe morpholino, pyrrolidino, pipéridino ou N-méthylpipérazino,

$R^3$ représente l'hydrogène, le chlore, le brome, un groupe méthyle, éthyle, méthoxy, éthoxy ou nitro,

$R^4$ et $R^5$ représentent chacun, indépendamment l'un de l'autre, l'hydrogène, un groupe alkyle en C1-C4 ou benzyle, et

X représente l'oxygène ou un groupe imino, et le groupe alkylène de la formule de A est à chaîne droite ou ramifiée et contient 2 à 6 atomes de carbone.

2. Composé selon la revendication 1, dans lesquels X représente l'oxygène.

3. Composé selon la revendication 1, dans lesquels $R^1$ et $R^2$ représentent des groupes méthyle ou éthyle et $R^3$ représente l'hydrogène.

4. Utilisation des composés selon la revendication 1 pour la coloration du papier ou dans des encres d'impression.